Europäisches Patentamt

European Patent Office

Office européen des brevets

(11) Veröffentlichungsnummer: **0 315 825 B1**

(12) **EUROPÄISCHE PATENTSCHRIFT**

(45) Veröffentlichungstag der Patentschrift: **26.08.92**

(21) Anmeldenummer: **88117780.2**

(22) Anmeldetag: **25.10.88**

(51) Int. Cl.⁵: **C21B 13/00**

(54) **Verfahren zur Vorbehandlung eines stückigen Kohlenstoffträgers.**

(30) Priorität: **03.11.87 DE 3737262**

(43) Veröffentlichungstag der Anmeldung:
**17.05.89 Patentblatt 89/20**

(45) Bekanntmachung des Hinweises auf die
Patenterteilung:
**26.08.92 Patentblatt 92/35**

(84) Benannte Vertragsstaaten:
**DE GB IT LU SE**

(56) Entgegenhaltungen:
**EP-A- 217 331      EP-A- 0 138 100
DE-A- 1 508 056      DE-A- 1 962 567
DE-A- 2 757 918      DE-A- 2 851 912
DE-A- 3 344 293      DE-A- 3 345 107
DE-A- 3 418 488**

**PATENT ABSTRACTS OF JAPAN, Band 12,
Nr. 92 (C-483)[2939], 25. März 1988; & JP-A-62
227 021 (KAWASAKI STEEL CORP.)
06-10-1987**

**PATENT ABSTRACTS OF JAPAN, Band 8, Nr.
283 (C-258)[1720], 25. Dezember 1984; & JP-
A-59 153 814 (KAWASAKI SEITETSU K.K.)
01-09-1984**

(73) Patentinhaber: **DEUTSCHE VOEST-ALPINE IN-
DUSTRIEANLAGENBAU GMBH
Neusser Strasse 111
W-4000 Düsseldorf 1(DE)**

(72) Erfinder: **Hauk, Rolf, Dr.
Friedrichstrasse 45
W-4000 Düsseldorf(DE)**

(74) Vertreter: **Meinig, Karl-Heinz, Dipl.-Phys.
PATENTANWÄLTE PFENNING MEINIG &
PARTNER ANWALTSSOZIETÄT Mozartstrasse 17
W-8000 München 2(DE)**

## Beschreibung

Die Erfindung betrifft ein Verfahren gemäß dem Oberbegriff des Anspruchs 1.

Aus der DE-OS 35 35 572 ist ein Verfahren zur Herstellung von Roheisen aus Feinerz bekannt, bei dem das Feinerz vorreduziert und der hierbei entstandene Eisenschwamm anschließend in einem Einschmelzvergaser mit Hilfe von Plasmabrennern und eines festen kohlenstoffhaltigen Reduktionsmittels aufgeschmolzen und fertigreduziert wird. Der Eisenschwamm wird in den unteren Abschnitt des Einschmelzvergasers im Bereich der Plasmabrenner, vorzugsweise direkt über die Plasmabrenner, oberhalb der sich sammelnden Schmelze und Schlacke eingegeben. Das zur Fertigreduktion benötigte feste kohlenstoffhaltige Reduktionsmittel wird von oben in den Einschmelzvergaser eingebracht.

Dieses besteht vorzugsweise aus Kohle, insbesondere Gasflammkohle mit einer Korngröße bis zu 50 mm, die bereits im oberen Bereich des Einschmelzvergasers getrocknet und entgast und damit in Koks umgewandelt wird. Daher entsteht im Einschmelzvergaser eine Wirbelschicht aus Koks.

Es hat sich herausgestellt, daß die Ausbildung einer für das Schmelzen und Fertigreduzieren optimalen Wirbelschicht sowie eines sich darunter formierenden Festbettes von der Kornverteilung der im Einschmelzvergasers entstehenden Koksteilchen abhängig ist. Viele Kohlesorten neigen jedoch bei der schockartigen thermischen Belastung, die beim Einbringen der Kohle in den eine Temperatur von etwa 1.000°C aufweisenden Kopfbereich des Vergasers auftritt, zum mehr oder weniger starken Zerplatzen, so daß die Kornverteilung entsprechend verändert wird.

Weiterhin kann das Problem bestehen, daß die zur Verfügung stehende Kohle nicht die gewünschte ausreichende Korngröße besitzt. Die Erzeugung von Feinkohle mit einer sehr kleinen Körnung von beispielsweise unter 1 mm beträgt beim Untertageabbau bereits ca. 30 % und wird aufgrund moderner Abbaumethoden und Aufbereitungsanlagen weiter ansteigen. Diese Feinkohlen sind daher für den Einsatz in einem mit einer Wirbelschicht arbeitenden Einschmelzvergaser weniger geeignet.

Es ist daher die Aufgabe der vorliegenden Erfindung, ein Verfahren zur Vorgabe eines zur Ausbildung einer Wirbelschicht sowie eines Festbettes geeigneten stückigen Kohlenstoffträgers bei der Herstellung von Roheisen aus Eisenerz, bei dem das Erz in einem oder mehreren Reduktionsaggregaten vorreduziert und der hierbei entstehende Eisenschwamm anschließend in einem Einschmelzvergaser mit Hilfe des stückigen Kohlenstoffträgers und eines sauerstoffhaltigen Gases aufgeschmolzen und fertigreduziert wird, wobei der Kohlenstoffträger in den oberen Teil und das sauerstoffhaltige Gas in den unteren Teil des Einschmelzvergasers eingeführt werden und in diesem mindestens teilweise die Wirbelschicht bilden, und sich unterhalb der Wirbelschicht ein Festbett aus dem stückigen Kohlenstoffträger formiert, anzugeben, bei dem ohne Beeinträchtigung des Schmelz- und Fertigreduktionsprozesses Feinkohlen für den Einsatz im Einschmelzvergaser verwendet werden können.

Diese Aufgabe wird erfindungsgemäß durch die im kennzeichnenden Teil des Anspruchs 1 angegebenen Merkmale gelöst. Vorteilhafte Weiterbildungen des erfindungsgemäßen Verfahrens ergeben sich aus den diesem zugeordneten Unteransprüchen.

Bei Verwendung von granulierter Feinkohle als stückiger Kohlenstoffträger wird die Kohle zunächst aufgemahlen und dann mit einem geeigneten Bindemittel vermischt, um ein mechanisch stabiles Granulat zu erhalten. Die Stückgröße des Granulats beträgt vorzugsweise etwa 10 mm.

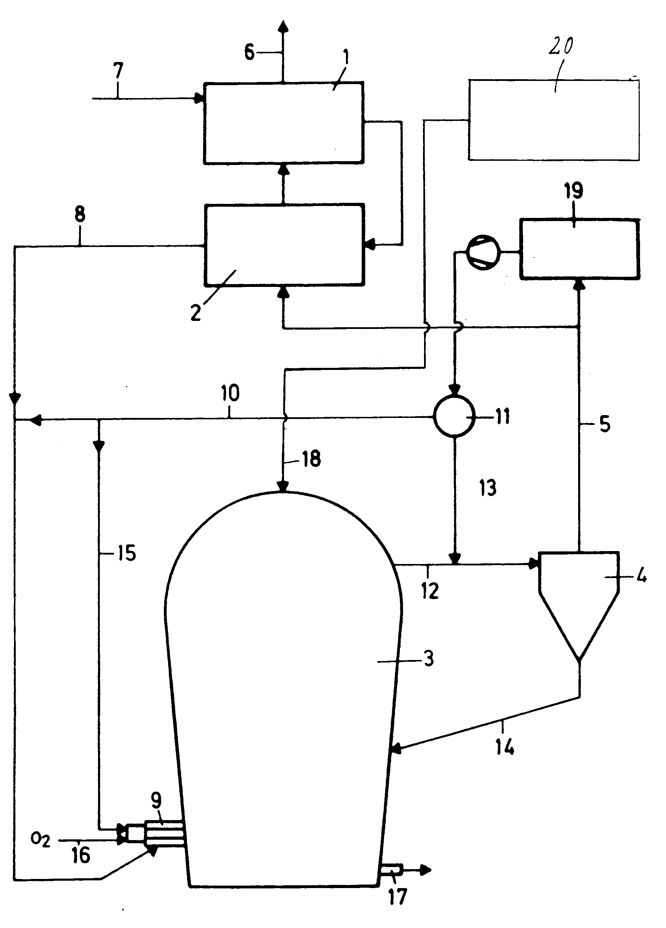

Die Erfindung wird im folgenden anhand eines in der Figur dargestellten Ausführungsbeispiels näher erläutert. Diese zeigt in schematischer Darstellung eine Anlage zur Erzeugung von geschmolzenem Roheisen aus Feinerz.

Die dargestellte Anlage enthält als wesentliche Bestandteile zwei Vorreduktionsaggregate 1 und 2 sowie einen Einschmelzvergaser 3. Die Vorreduktion erfolgt mit Hilfe des in noch zu beschreibender Weise im Einschmelzvergaser 3 erzeugten, auf 850°C gekühlten und in einem Zyklon 4 gereinigten Gases. Über eine Leitung 5 strömt dieses im wesentlichen CO und $H_2$ enthaltende Gas vom Zyklon 4 zunächst durch das Vorreduktionsaggregat 2 und dann durch das Vorreduktionsaggregat 1 und wird dann als Abgas über eine Leitung 6 abgenommen. Das Feinerz wird über eine Leitung 7 zugeführt und bewegt sich im Gegenstrom zu dem es reduzierenden Gas zunächst durch das Aggregat 1 und dann durch das Aggregat 2, um dann über eine Leitung 8 aus diesem abgeführt zu werden. Die Vorreduktion wird in Wirbelschichten, Reduktionszyklonen oder zirkulierenden Wirbelschichten durchgeführt.

Das vorreduzierte Feinerz bzw. der Eisenschwamm wird über die Leitung 8 zu im unteren Abschnitt des Einschmelzvergasers 3 vorgesehenen Plasmabrennern 9 geführt. Der Transport des Eisenschwamms erfolgt mit Hilfe eines über eine Leitung 10 in die Leitung 8 eingespeisten Gases. Die Leitung 10 ist an eine Sammelleitung 11 angeschlossen, in der sich aus dem Zyklon 4 herausgeführtes, im Wäscher 19 gekühltes und anschließend verdichtetes Gas befindet. Das im Einschmelzvergaser 3 erzeugte Gas wird über eine Leitung 12 direkt in den Zyklon 4 geleitet, dort entstaubt und über die Leitung 5 als Reduktionsgas

2

in die Vorreduktionsaggregate 1 und 2 geschickt. Da das Gas den Einschmelzvergaser 3 mit einer Temperatur von etwa 1000°C verläßt,die Vorreduktion jedoch vorzugsweise bei einer Temperatur von 850°C durchgeführt wird, wird über eine Leitung 13 kühleres, aus dem Wäscher 19 stammendes Gas von der Sammelleitung 11 in die Leitung 12 eingespeist, so daß das in den Zyklon 4 gelangende Gas die gewünschte Temperatur von 850°C aufweist. Der im Zyklon 4 aus dem Gas abgeschiedene Staub wird über eine Leitung 14 wieder in den Schmelz- und Reduktionsbereich des Einschmelzvergasers 3 zurückgeführt.

Die Plasmabrenner 9 sind in gleicher Höhe in gleichen Abständen über den Umfang des Einschmelzvergasers 3 verteilt. Es kann jedoch auch nur ein Plasmabrenner vorgesehen sein, wenn dieser eine ausreichende Wärmeenergie liefert. Als Plasmagas wird ebenfalls gekühltes, aus dem Wäscher 19 stammendes Gas verwendet, das aus der Sammelleitung 11 über die Leitung 10 und eine von dieser abzweigende Leitung 15 zu den Plasmabrennern 9 geleitet wird. Als Plasmagas kann jedoch auch über die Leitung 6 abgeführtes und gekühltes Abgas verwendet werden. Über eine Leitung 16 wird Sauerstoff zu den Plasmabrennern 9 geführt und über diese in den Einschmelzvergaser 3 eingebracht. Der Sauerstoff kann jedoch auch über von den Plasmabrennern 9 getrennte Düsen in den Einschmelzvergaser 3 eingeblasen werden. Über eine oder zwei Abstichleitungen 17 werden in gegebenen Zeitabständen die Eisenschmelze und die Schlacke abgezogen, die sich am Boden des Einschmelzvergasers 3 sammeln.

Über eine Leitung 18 wird von oben ein stückiger Kohlenstoffträger mit einer Körnung von vorzugsweise 0 bis 50 mm in den Einschmelzvergaser 3 eingegeben. Dieser Kohlenstoffträger besteht aus Feinkohle, die aufgemahlen, mit einem Bindemittel versetzt und dann bis zu Stückgrößen von etwa 10 mm granuliert wurde. Die Leitung 18 ist mit einer entsprechenden Vorbehandlungseinrichtung 20 verbunden. Sie enthält eine Mahlstation, Mischstation und Granulierstation für feinkörnige Kohle. In der Mischstation wird das Bindemittel zugegeben, das beispielsweise aus Kalk, Melasse, Pech und/oder Teer bestehen kann.

Der Kohlenstoffträger fällt schnell durch den freien Kopfbereich des Vergasers, wobei er vollständig getrocknet und entgast wird. Der so entstandene Koks fällt auf eine Koksschicht, die in fließbettähnlichem Zustand gehalten wird. Dieses Fließbett bzw. diese Wirbelschicht wird durch das hochströmende Plasmagas und den Sauerstoff sowie durch das bei der Fertigreduktion des Eisenschwammes entstehende CO aufrechterhalten. Das sich oberhalb des Fließbettes sammelnde Gas besteht im wesentlichen aus CO und $H_2$ und besitzt eine Temperatur von etwa 1000°C. Es wird über die Leitung 12 abgezogen.

Der Eisenschwamm wird im Wirkungsbereich der Plasmabrenner geschmolzen und durch den dort befindlichen Koks vollständig reduziert. Das entstandene flüssige Eisen und auch die flüssige Schlacke tropfen herab und sammeln sich am Boden des Einschmelzvergasers 3. Eine für einen wirtschaftlichen Betrieb geeignete Wirbelschichthöhe liegt zwischen einem und fünf Metern.

Die über die Leitung 18 eingegebene vorbehandelte Kohle kann von beliebiger Qualität sein. Es kann beispielsweise eine preisgünstige Gasflammkohle folgender Zusammensetzung verwendet werden:
5 % Feuchte, 35,7 % flüchtige Bestandteile, 76,6 % C, 5,3 % H, 8,6 % O, 1,6 % N, 7,3 % Asche; der Heizwert beträgt 30 870 kJ/kd (alle Werte auf wasserfreien Zustand bezogen). Würde bei Verwendung dieser Kohle keine zusätzliche Energie durch die Plasmabrenner 9 aufgebracht werden, dann müßte zum Betrieb des Einschmelzvergasers 3 der eingeführte Eisenschwamm auf einen Metallisierungsgrad von 90 % vorreduziert werden. Außerdem wären der Kohle- und der Sauerstoffverbrauch relativ hoch. Weiterhin wäre eine Reduktion von Feinerz in der Wirbelschicht wegen der auftretenden Zusammenballungen nicht sinnvoll.

Jedoch kann das vorliegende Verfahren grundsätzlich auch ohne den Einsatz von Plasmabrennern durchgeführt werden, und zwar insbesondere dann, wenn Eisenerz in Stückform oder in Form von Pellets verwendet wird. Der in der Vorreduktionsstufe hieraus erzeugte Eisenschwamm wird dann ebenfalls im Kopfbereich in den Einschmelzvergaser eingebracht.

**Patentansprüche**

1. Verfahren zur Erzeugung eines zur Ausbildung einer Wirbelschicht sowie eines Festbettes geeigneten stückigen Kohlenstoffträgers bei der Herstellung von Roheisen aus Eisenerz, bei dem das Erz in einem oder mehreren Reduktionsaggregaten vorreduziert und der hierbei entstehende Eisenschwamm anschließend in einem Einschmelzvergaser mit Hilfe des stückigen Kohlenstoffträgers und eines sauerstoffhaltigen Gases aufgeschmolzen und fertig reduziert, wobei der Kohlenstoffträger in den oberen Teil und das sauerstoffhaltige Gas in den unteren Teil desEinschmelzvergasers eingeführt werden und in diesem mindestens teilweise die Wirbelschicht bilden, und sich unterhalb der Wirbelschicht ein Festbett aus dem stückigen Kohlenstoffträger formiert, dadurch **gekennzeichnet,** daß der Kohlenstoffträger in Form von Feinkohle vor Einbringung in den Einschmelzvergaser mit Bindemittel wie Kalk, Melasse, Pech und/oder Teer versetzt und dann granuliert wird.

**2.** Verfahren nach Anspruch 1,
dadurch gekennzeichnet, daß die Feinkohle vor der Zugabe des Bindemittels aufgemahlen wird.

**3.** Verfahren nach Anspruch 1 und 2,
dadurch gekennzeichnet, daß die granulierte Feinkohle eine Stückgröße von etwa 10 mm aufweist.

**4.** Verfahren nach Anspruch 1,
dadurch gekennzeichnet, daß wenigstens ein Teil der zum Zerplatzen neigenden stückigen Kohle, z.B. Anthrazit, ein langsames Aufheizen begünstigend, dem als Reduktionsschacht ausgebildeten Vorreduktionsaggregat zugeführt wird.

## Claims

**1.** Process for the production of a fragmented carbonaceous carrier, which is suitable for forming both a fluidized layer and a solid bed, during the production of pig iron from iron ore, in which the ore is pre-reduced in one or more reduction units, and a thus created sponge iron is subsequently molten and finally reduced in a melt-down furnace with the aid of this fragmented carbonaceous carrier and an oxygenic gas, whereby the carbonaceous carrier is introduced into the upper part, and the oxygenic gas into the lower part of the melt-down furnace, forming therein an at least partially fluidized layer, and a solid bed of fragmented carbonaceous carrier forms underneath the fluidized bed, **characterised in that,** prior to being fed into the melt-down furnace, the carbonaceous carrier in the form of fine coal is staggered with a binding agent, such as lime, molasses, pitch and/or tar, and then granulated.

**2.** Process according to claim 1, **characterised in that** the fine coal is ground prior to the addition of binding agent

**3.** Process according to claim 1 and 2, **characterised in that** the size of the pieces of granulated fine coal is approximately 10 mm.

**4.** Process according to claim 1, **characterised in that** at least part of the coal pieces likely to burst, for example anthracite, which promote slow heating, are fed to the pre-reduction unit which is a reduction shaft.

## Revendications

**1.** Procédé pour la production d'un porteur de carbone en morceaux qui convient pour la formation d'un lit fluidisé, respectivement d'un lit fixe, lors de la production de la fonte brute à partir de minerai de fer, le minerai étant préréduit dans plusieurs unités de réduction et la fusion et l'achèvement de la réduction de l'éponge de fer ainsi produit se poursuivant dans un gazéificateur de fusion à l'aide du porteur de carbone en morceaux et d'un gaz contenant de l'oxygène, ledit porteur de carbone en morceaux étant introduit dans la partie supérieure et ledit gaz contenant l'oxygène étant introduit dans la partie inférieure du gazéificateur de fusion, formant ainsi au moins partiellement ledit lit fluidisé, et le porteur de carbone en morceaux le lit fixe en-dessous du lit fluidisé, **caractérisé en ce que** ledit porteur de carbone est mélangé, avant introduction dans le gazéificateur de fusion, sous forme de charbon fin avec un liant comme de la chaux, de la mélasse, de la poix et/ou du goudron et est ensuite granulé.

**2.** Procédé selon la revendication 1, caractérisé en ce que le charbon fin est pulvérisé avant l'ajoute du liant.

**3.** Procédé selon la revendication 1 ou 2, caractérisé en ce que le charbon fin granulé a une granulométrie d'environ 10 mm.

**4.** Procédé selon la revendication 1, caractérisé en ce que au moins une partie du charbon en morceaux ayant la tendance à éclater, par exemple l'anthracite, est ajoutée à l'unité de préréduction, qui a la forme d'une cuve de réduction, favorisant ainsi un échauffement lent.